(19) Europäisches Patentamt
European Patent Office
Office européen des brevets

(11) EP 4 019 479 A1

(12) EUROPEAN PATENT APPLICATION

(43) Date of publication:
**29.06.2022 Bulletin 2022/26**

(21) Application number: **20020662.1**

(22) Date of filing: **23.12.2020**

(51) International Patent Classification (IPC):
***C03C 13/06*** *(2006.01)* ***C03C 25/32*** *(2018.01)*
***C03C 25/34*** *(2006.01)* ***C08L 61/24*** *(2006.01)*
***C08L 61/28*** *(2006.01)* ***C09D 161/24*** *(2006.01)*
***C09D 161/28*** *(2006.01)* ***D04H 1/4218*** *(2012.01)*
***D04H 1/64*** *(2012.01)*

(52) Cooperative Patent Classification (CPC):
**C03C 13/06; C03C 25/32; C03C 25/34; C08L 61/24; C08L 61/28; C09D 161/24; C09D 161/28; D04H 1/4209; D04H 1/4218; D04H 1/641**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Prefere Resins Holding GmbH**
**15537 Erkner (DE)**

(72) Inventors:
- **Prock, Christoph**
  **3910 Zwettl (AT)**
- **Schwab, Michael**
  **58460 Iserlohn (DE)**

(74) Representative: **Deckers, Hellmuth Alexander**
**Kanzlei Dr. Deckers**
**Breitbachstrasse 15**
**55218 Ingelheim am Rhein (DE)**

(54) **WATER-DILUTABLE BINDERS**

(57) The invention relates to water-dilutable binders for fibrous materials which are compositions **AB** comprising mixtures of amino resins **A** made from a dialdehyde **A2** and an aminoplast former **A1**, with a reaction product **B** of a carbohydrate **B1** having free hydroxyl groups and an anhydride **B2** of a polycarboxylic acid, to a process for its preparation, and to a method of use thereof as binder for mineral fibres.



Processed by Luminess, 75001 PARIS (FR)

**Description**

Field of the Invention

This invention relates to water-dilutable binders, particularly for use with fibrous materials, especially those derived from inorganic fibres, to a process for their preparation, and to a method of use thereof in the preparation of formed products.

Background of the Invention

Fibrous materials can be based on organic or on inorganic fibres. Due to their inherent flame resistance, inorganic fibres are mostly used in thermal and acoustic insulation applications. Inorganic fibres are also preferably used for filtering applications as they resist solvents and oils. Glass fibres for insulation are fibres of vitreous structure produced from silicate melts by mechanical or pneumatic processes well known in the art. Such fibres are also called glass wool, slag wool, rock wool, depending on the source of the primary material, or mineral wool or mineral fibres which latter expression shall stand here as general reference to all of the fibres as mentioned before. The industrial exploitation of the process did not occur until 1930 (DE 539 738); the blowing process for mineral wool which is still in use today, was first patented in 1933 (US 2133235 and US 2133236). Application forms of mineral wool are in the form of mats, felts, pipes or slugs for filtration, and of mats, pipes or slabs for heat insulation, and for acoustic insulation. Various binders have been used commercially, such as sodium silicates, polyester resins, amino resins made from formaldehyde and melamine, urea, or their mixtures, polyamides, furane-based resins, and most prominently, phenolic resin-based binders. These latter are usually resoles or modified resoles which can be tailored to have gel times (usually referred to as "B times") adapted for an optimum cure speed covering the time from spray application of the binder to the primary mineral fibre product, up to oven cure. Recently, various efforts have been seen to replace phenolic resins as binders by systems which are formaldehyde-free or have a sufficiently reduced formaldehyde content. In the context of this invention, the term "formaldehyde-free" shall denote a formaldehyde emission of less than 0.1 $cm^3/m^3$ (a volume fraction of less than 0.1 ppm, measured according to the standard EN 717-1). Likewise, reduction of the amount of phenolic bodies in these binders has been strived for.

In the patent CA 2558981 C, a formaldehyde-free binder for glass wool is disclosed which is based on a thermally curable polyester made from a polycarboxylic acid component and a polymeric polyhydroxy component wherein both components have an alkaline pH, wherein the ratio of the amount of substance of acidic hydrogen groups in the polycarboxylic acid component and the amount of substance of hydroxyl groups in the polymeric polyhydroxy component is in the range from about 0.6 mol : 1 mol to 1.2 mol : 1 mol. The polycarboxylic acid component is selected from the group consisting of di-, tri-, tetra-, and penta-carboxylic acids, their salts, their anhydrides, and mixtures of these. The reaction product has a maximum of five ester linkages between a given molecule of the polycarboxylic acid component and one or more molecules of the polymeric polyhydroxy component. Preferred polymeric polyhydroxy components comprise hydrolysed polyvinylacetate, preferably with a degree of hydrolysis of from 87 % to 89 %. Only maleic acid or its ammonium salt are used in the examples. A cure time is given in example 18 as thirty minutes at 149 °C.

In the patents US 7,638,160 B2 and US 8,057,860 B2 (both corresponding to US 2010/0068961 A1), a binder is used in the preparation of glass fiber composites which binder comprises a formaldehyde-free resin which is preferably an acrylic resin made by mixing of a polyacid and a polyol, and an ethoxysilane. Curing is effected in an oven preferably at temperatures about 180 °C to about 225 °C. Generally, the mat resides within the oven for a period of time from about one half minute to about three minutes. For the manufacture of conventional thermal or acoustical insulation products, the time ranges from about three quartes of a minute to about two minutes, see col. 7, lines 7 to 12, of US 8,057,860 B2.

In the patent application WO 2008/053332 A1 (equivalent to EP 2 077 977 B1), a curable aqueous composition is disclosed which comprises an adduct of a carbohydrate polymer and a multifunctional crosslinking agent selected from the group consisting of monomeric polybasic acid, salts thereof, anhydrides thereof, and mixtures of these.

In the patent EP 2 222 759 B1, corresponding to WO 2009/080696 A2, mineral wool composites are described which are based on a formaldehyde-free binder made from polysaccharides and at least one crosslinker therefor, the crosslinker being selected from the group consisting of adipic acid/acetic acid mixed anhydride, epichlorohydrin, sodium trimetaphosphate, sodium trimetaphosphate/sodium tripolyphosphate, phosphorous oxychloride, polyamide-epichlorohydrin-crosslinking agents, anhydride containing polymers, cyclic amide condensates, zirconium and titanium complexes, adipic acid dihydrazide, diepoxides and polyepoxide compounds, difunctional monomers, dianhydrides, acetals, polyfunctional silanes, blocked aldehydes, polycarboxylates, boron compounds and combinations thereof, and the polysaccharides being preferably a non-starch polysaccharide selected from the group consisting of cellulose, guar, xanthan, alginates, pectin and gellan and their derivatives. Curing time in an oven was twenty minutes at 180 °C / 165 °C with various crosslinkers (examples 3 / 4, polysaccharide: depolymerised carboxymethylcellusose / mixture of two hydroxyethylcellulose grades of different molar mass; crosslinkers: sodium trimetaphosphate; sodium borate decahydrate;

solution of esterified styrene maleic-anhydride copolymer neutralised with ammonia, available as "Scripset® SC 740" from Hercules, Inc., Wilmington, Delaware; polyamide-epichlorohydrin crosslinking agent available as "Polycup® 6310" from Hercules, Inc., Wilmington, Delaware).

In the patent US 9,242,899 B2, a formaldehyde-free aqueous binder composition in the form of a dispersion is described, which comprises starch, whereof a mass fraction of at least 95 % is water-insoluble native starch, and one or more acrylic components selected from the group consisting of polyacrylic acid, copolymers of acrylic and maleic acids, copolymers of ethylene-unsaturated moieties containing an amount-of-substance fraction of at least 10 % of acrylic acid, maleic acid or maleic anhydride; salts of any of these (co)polymers, curable resins based on the preceding (co)polymers, and mixtures thereof. Curing time is three minutes at 170°C, see example 1 in column 8.

In the patent US 9,976,061 B2, an aqueous sizing composition for insulating products based on mineral wool is disclosed, the aqueous sizing composition comprising: (a) at least one saccharide selected from the group consisting of a reducing sugar, a hydrogenated sugar and a mixture thereof, the mass fraction of hydrogenated sugars in the saccharide being between 25 % and 100 %; (b) at least one monomeric polycarboxylic acid or a salt or anhydride thereof; and (c) at least one epoxysilane, the mass $m_c$ of this epoxysilane being more than 2.0 % of the sum $m_a + m_b$ of the masses of components (a) and (b). Curing is effected at 270 °C (example 1, col. 7, lines 8 and 9), no duration for curing has been mentioned.

In the patent application EP 3 133 116 A1, an aqueous heat-curable binder composition for fibrous materials is disclosed which comprises one or more reducing sugars; one or more amino acids; and one or more polyglycidyl ether compounds of polyhydric alcohols. Curing temperature is between 120°C and 300 °C (see [0031]), no curing time has been stated.

While these binders show acceptable adhesion properties and fulfill the requirement of avoiding the evolution of formaldehyde vapours during curing, it was found that the B-times of these binder compositions were too long for the intended application.

Synthetic resins based on reaction products of melamine and glyoxal have been described in the prior art, mainly for use as textile auxiliaries, such as in the improvement of wrinkling, crushing, and creasing properties of textile materials, and as additives in the processing of leather.

In EP 0281921 A2, an inorganic fibre mat has been disclosed where a water-soluble reaction product (A) of a condensable (cyclo)aliphatic ketone with formaldehyde is mixed with a water-soluble aminoplast or phenolic resin (B) based on urea, melamine, or 4,5-dihydroxyimidazolidine-2-one condensation products with formaldehyde, glyoxal, or glutaraldehyde. The fibre mat is impregnated with this binder mixture and cured.

In DE 21 10 612 A1, a mixture of polyvinyl alcohol with a thermosetting resin is described as stabiliser for a fleece comprising inorganic fibres made from glass, asbestos, slag, rock or basalt. The thermosetting resin is a reaction product of formaldehyde, trioxane, glyoxal, acetaldehyde or benzaldehyde with urea, benzoguanamine, dicyandiamide, an aminotriazine such as melamine or ammeline, phenol, a halophenol or a polynuclear phenol or diphenylol-propane, using an acid as catalyst.

In DE 16 19 289 A1, leather substitutes are described made by coating a fibrous substrate with a solution of a polyurethane which is crosslinked with at least one aldehyde having from one to four carbon atoms, selected from the group consisting of formaldehyde, acetaldehyde, glyoxal, or derivatives thereof which are exemplified as being among others, methylol urea, methylol melamine, hexamethylol melamine, dimethylol ethylene urea, dimethylol hydroxyethylene urea, and tetramethylol acetylene urea.

In US 3,320,197 A, an emulsifier for water-insoluble substances, viz., antimony trioxide and silica, is described which is a condensation compound obtained by reaction of aliphatic or aromatic compounds having epoxy groups and ether linkages with an aliphatic, cycloaliphatic or heterocyclic di- or polyamine, or a neutralised or acidified derivative thereof. In the case of silica emulsions, an aqueous solution of methylolmelamine etherified with methyl alcohol may be added. The condensation compounds may be further reacted with an aliphatic aldehyde having from one to three carbon atoms, for example formaldehyde, acetaldehyde, crotonaldehyde, or glyoxal.

In GB 976712A, acetal condensation products are described, obtained by reaction of water-soluble or water-dispersible formaldehyde resin precondensates with a water-soluble or water-dispersible polyacetal derived from an aldehyde having less than ten carbon atoms and a polyethyleneoxy compound having at least two hydroxyl groups. Among the said precondensates, urea-formaldehyde and melamine-formaldehyde condensates are mentioned, as well as dimethylol urea, trimethylolmelamine and hexamethylolmelamine, dimethylol ethylene urea, the dimethylol derivative of glyoxal monoureide and the tetramethylol derivative of glyoxal diureide, and their ethyl ethers. The polyacetals are made from aldehydes such as formaldehyde, acetaldehyde, propionaldehyde, butyraldehyde, and glyoxal, and from oxyethylene compounds such as polyoxyethylene glycol, ethylene oxide derivatives of glycerol and their esters with fatty acids, ethylene oxide derivatives of primary amines, quaternary ammonium salts derived therefrom, and ethylene oxide reaction products with triethanolamine.

No mention is made of reaction products of melamine and glyoxal as sole binders in these documents, nor of formaldehyde free resins made by reacting melamine and glyoxal.

Object of the Invention

It was therefore an object of the invention to provide a binder composition with low formaldehyde emission, viz. a formaldehyde emission of less than 0.1 $cm^3/m^3$ (a volume fraction of less than 0.1 ppm, measured according to the standard EN 717-1), preferably less than 0.05 $cm^3/m^3$ (a volume fraction of less than 0.05 ppm, measured according to the standard EN 717-1), particularly preferably, zero formaldehyde emission (which means that the formaldehyde emission is less than the detection limit of this standard) upon curing, high curing speeds which can be adapted to the purpose, and also binding properties on par with the phenol-formaldehyde resins which are still the industry standard.

Summary of the Invention

It was found that binder compositions **AB** comprising mixtures of amino resins **A** made from a dialdehyde **A2,** preferably glyoxal, and an aminoplast former **A1**, preferably melamine, optionally including also other dialdehydes **A2** and/or other aminoplast formers **A1,** with a reaction product **B** made from of a carbohydrate **B1** having free hydroxyl groups, preferably a monosaccharide, and an anhydride **B2** of a polycarboxylic acid, preferably a dicarboxylic or tricarboxylic acid, lead to binder compositions **AB** which are free from formaldehyde, can be simply adapted to the needed cure speed or B time by adjusting the mixing ratio, and lead to excellent binding for a broad range of mineral fibres. Both components **A** and **B** are in aqueously diluted form. In the speed-optimised formulations, curing times, measured as B times in accordance with ISO 8987, of less than thirty seconds can be reached at 135 °C and 170 °C.

It was also found that a binder composition comprising a reaction product **A'** of melamine and glyoxal, viz., the preferred compounds **A1** and **A2** mentioned supra, as sole resinous binder can be used to prepare formed bodies such as felts, mats, pipes, slugs, and slabs from mineral fibres, and also as binders for lignocellulosic materials such as wood fibres and pulp, especially for the preparation of engineered wood articles such as fibre board or oriented strand board. For certain other applications, such as in crosslinkers for curing of oven-drying paints, also mixtures **A"** of the reaction products **A'** with further reaction products of other aminoplast formers **A1'** different from melamine as mentioned supra (with the set **A1'** being defined as the subset of **A1** which includes all elements thereof with the exception of melamine), and/or other dialdehydes **A2'** different from glyoxal as mentioned supra (with the set **A2'** being defined as the subset of **A2** which includes all elements thereof with the exception of glyoxal) can be used, particularly those where the mass fraction of melamine *w*(Mel) in the mass of all aminoplasts *m*(A1') + *m*(Mel) in the mixture of aminoplast formers is preferably at least 50 %:

$$w(\mathrm{Mel}) = m(\mathrm{Mel}) \;/\; [m(\mathrm{A1'}) + m(\mathrm{Mel})] \geq 50\ \%,$$

where *m*(A1') is the mass of all aminoplast formers in the mixture except melamine, and *m*(Mel) is the mass of melamine in the mass of all aminoplast formers used; and where the mass fraction of glyoxal *w*(GO) in the mass of all dialdehydes *m*(A2') + *m*(GO) in the mixture of dialdehydes is preferably at least 50 %:

$$w(\mathrm{GO}) = m(\mathrm{GO}) \;/\; [m(\mathrm{A2'}) + m(\mathrm{GO})] \geq 50\ \%,$$

where *m*(A2') is the mass of all dialdehydes in the mixture except glyoxal, and *m*(GO) is the mass of glyoxal in the mass of all dialdehydes used.

In the context of this invention, a "resinous binder" is a polymeric or oligomeric material, or a monomeric material that is converted to a polymeric material by a curing step, i. e. a chemical reaction leading to enlargement of the molecules which after curing comprise a plurality of parts of the original molecules without the reactive groups therein, these groups forming chemical bonds after the curing step, optionally under formation of small molecules such as water in condensation reactions. In the context of this invention, an "oligomeric material" is a material that consists of molecules with an average of at least two, and not more than ten repeating units, and a "polymeric material" consists of molecules with an average of more than ten repeating units.

It has further been found that reaction products of glyoxal and melamine have desirable properties if the ratio *n*(Mel) / *n*(GO) of the amount of substance of melamine *n*(Mel) and the amount of substance of glyoxal *n*(GO) in the addition reaction is between 1:5.0 and 1:15, preferably between 1: 5.5 and 1:12. The viscosity of the resins obtained and the cure speed can be tailored to the intended application by variation of this ratio, i.e., variation of the stoichiometry.

Detailed Description of the Preferred Embodiments

The aminoplast formers **A1** are linear, branched or cyclic amides or amidines or mixtures of these, particularly

amino-1,3,5-triazines such as melamine, acetoguanamine, caprinoguanamine, butyroguanamine, isobutyroguanamine and benzoguanamine, having at least two amino or acid amide groups -N(H)-R per molecule, where R can be H or a lower alkyl group having from one to four carbon atoms, namely methyl, ethyl, n-propyl, isopropyl, n-butyl, sec-butyl, iso-butyl or tert-butyl, an average of at least two >N(H)- groups per molecule being present in the aminoplast former which are derived from the said amino groups or acid amide groups. Useful linear and branched amides are urea, thiourea, guanidine, cyanamide and dicyanodiamide, and also diamides of aliphatic dicarboxylic acids such as adipic diamide, succinic diamide, and glutaric acid, and (hetero)cyclic amides are preferably selected from the group consisting of the aminotriazines mentioned supra including ammeline and ammelide, and also ethylene urea, propylene urea, and acetylene diurea, also referred to as glycoluril. Mixtures of these, or derivatives such as hydroxyethylene urea and the like, can also be used. Preferred are melamine, and mixtures of melamine with ethylene urea or urea, particularly those mixtures where the mass fraction of melamine in those is at least 40 %, more preferably at least 50 %, and most preferred, at least 75 %. These latter compounds urea and melamine are made from carbon dioxide and ammonia as raw materials, both not being based on fossil fuels.

The dialdehydes **A2** are linear aliphatic dialdehydes having two

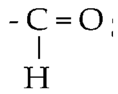

groups per molecule, H i. e. two hydrogen atoms bound to a carbonyl carbon atom, viz., a carbon atom which is bound to an oxygen atom by a double bond, and up to six carbon atoms, such as glyoxal, malondialdehyde, succinaldehyde, glutaraldehyde, 2-methylglutaraldehyde, and adipaldehyde. Preferred are glyoxal and glutaraldehyde, each alone or in combination. Glyoxal can also be made using natural carbohydrate resources, e. g., from glucose and other $C_6$- or $C_5$-monosaccharides such as galactose, mannose, fructose, ribose, arabinose, ribulose, or from glycerinaldehyde, glycerol and mannitol. Glutaraldehyde can be made from glycerol which in turn is derived from vegetable oil or from fats, by dehydration of glycerol to acrolein which is then reacted in a Diels-Alder cyclisation reaction with a vinyl alkyl ether to form a 2-alkoxy-3,4-dihydropyrane which can then be hydrolysed to form glutaraldehyde and the alkanol component of the vinylalkyl ether (US 2012/0277475 A1).

Most preferred are amino resins **A** prepared from melamine or its mixtures with ethylene urea or urea, with glyoxal. They are preferably prepared by first charging the aldehyde, optionally adjusting the pH to slightly acidic, i. e. between 6.5 and 5.5, and then adding the aminoplast former at ambient temperature during thirty to sixty minutes whereupon a slight exotherm is noted, together with an increase of viscosity. The pH usually increases by 0.5 to 1.5 units. The temperature in the reaction vessel is raised to between 40 °C and 50 °C, and stirring is continued for about one hour whereafter the mixed is allowed to cool to room temperature (25 °C).

The carbohydrates **B1** having free hydroxyl groups have at least two hydroxy groups, more preferably at least three hydroxyl groups, per molecule, and are preferably non-polymeric, particularly monosaccharides chosen from naturally occurring saccharides such as glucose (dextrose), and also galactose, fructose and xylose. Owing to its ready availability and consistent quality, glucose is preferred for technical applications. Disaccharides such as sucrose, lactose, maltose, isomaltulose and trehalose can also be used for the purpose of this invention, while natural oligosaccharides like maltodextrines and natural polysaccharides like starch, cellulose and pectins are less preferred due to the high viscosity of the reaction products **B** obtained therefrom. In a preferred embodiment, glucose alone is used as monosaccharide. In another embodiment, a mixture of glucose with sugar alcohols such as mannitol, erythritol, and threitol is used. In a further embodiment, mixtures of monosaccharides with multifunctional alcohols having at least three hydroxyl groups per molecule can be used, like glycerol, trimethylolpropane, pentaerythritol, trihydroxyethyl isocyanurate, diglycerol, ditrimethylolpropane, and dipentaerythritol can be used. The additional presence of such branched, unbranched or cyclic multifunctional alcohols can lower the viscosity of the reaction products, and thus, also of the binder composition. It is preferred when using such mixtures, to keep the mass fraction of glucose in these mixtures of components **B1** at least at 50%.

The anhydrides **B2** of polycarboxylic acids are preferably anhydrides of aliphatic or aromatic dicarboxylic acids or tricarboxlic acids. Anhydrides of tetracarboxylic acids or of acids with still higher functionality are less preferred due to their propensity to form gelled reaction products, and also to their limited availability and higher cost. Among the aliphatic acid anhydrides, most preferred are maleic acid anhydride, succinic acid anhydride, and among the aromatic acid anhydrides, phthalic acid anhydride and trimellithic anhydride are preferred. The latter is preferably used in mixture with anhydrides of dicarboxylic acids, with the mass fraction of trimellithic anhydride not exceeding 10 % in the acid anhydride mixture, to avoid gelation.

The components **B** are preferably made by first charging water into a reaction vessel, adjusting the temperature to between 20°C and 40 °C, preferably to (25 ± 2) °C, and then adding the acid anhydride component **B2** at this

temperature under stirring over a period of from fifteen to forty-five minutes, heating the mixture under stirring to a temperature of between 20°C and 50 °C, preferably to (40 ± 2) °C, and continue stirring until component **B2** is completely dissolved. The reaction mixture is then cooled to 20°C, and an aqueous ammonia solution is then added over a time interval of from sixty to one hundred twenty minutes until a pH of 4.1 ± 0.2 is reached. A further portion of water is added, whereafter a water-soluble amine, preferably triethanolamine, is added at a temperature to between 20 °C and 40 °C, preferably to (25 ± 2) °C, and after homogenisation, the carbohydrate component **B1** is added under stirring and keeping the temperature constant. Stirring is continued for about one hour until a homogeneous solution is obtained. This solution is miscible with water without phase separation over the whole range of compositions.

The binder composition **AB** is prepared by mixing the aqueous solutions of components **A** and **B** in such quantities that the mass fraction $w_{B,sol}$ of the aqueous solution of component **B** in the mixture of solutions of **A** and **B** is from 1 % to 60 %, preferably from 5 % to 40 %, more preferred, from 10 % to 35 %, and most preferred from 15 % to 30 %. The mass fractions of the aqueous solutions are calculated as $w_{A,sol}=m_{A,sol}/(m_{A,sol}+m_{B,sol})$ and $w_{B,sol}=m_{B,sol}/(m_{A,sol}+m_{B,sol})$, where $m_{A,sol}$ is the mass of the solution of component **A** and $m_{B,sol}$ is the mass of the solution of component **B.** The aqueous solutions of components **A** and **B** usually have each a mass fraction of solids between 45 % and 55 %. Thus, the ratios $m$(B,s) / $m$(A,s) of the mass $m$(B,s) of solids in **B** to the mass $m$(A,s) of solids in **A** is from 1/99 = 0.01 to 60/40 = 1.5, preferably from 5/95 to 40/60 = 0.05 to 0.67, more preferred, from 10/90 to 35/65 = 0.11 to 0.54, and most preferred, from 15/85 to 30/70 = 0.18 to 0.43. Mixing can be made by stirring for several minutes, as the viscosity is not very high. It is preferred to add the solution of lower viscosity (usually that of component **B**) slowly to the stirred solution of higher viscosity (usually that of component **A**), for more effective mixing.

The binder composition **AB** of the present invention may be applied to mineral fibres as substrate in the form of its aqueous solution by means of a suitable spray applicator for distributing the binder evenly throughout the substrate formed by the mineral fibres, such as a mineral fibre mat. For spray application, the binder composition may also be further diluted by addition of water. The binder composition may also be applied by other means known in the art such as airless spray, air spray, padding, saturating (soaking and pressing), and roll coating. The composite is formed when the binder is applied to the substrate and then cured. In this disclosure, the term "curing" refers to any process that can facilitate the crosslinking reaction between a carbohydrate **B1** and the crosslinker therefor, **B2,** and an aminoplast former **A1** and the dialdehyde **A2.** Curing is typically achieved by a combination of temperature and pressure. A simple way to effect the cure is to place the binder and the substrate in a high temperature oven. Typically, a curing oven operates at a temperature of from 110 °C to 325 °C. One advantage of the binder system of the present invention is that it cures at relatively low temperature such as below 200 °C. In another aspect, the binder system cures below 180 °C, and more preferably below 150 °C. The cure temperature and pressure depends on the type and amount of crosslinker, type and level of catalyst used as well as the nature of the substrate. The ratio of the mass of the solid portion of the binder $m$(AB,s) to the mass $m$(MF) of the mineral fibres, can vary from application to application and also depends upon the type of substrate. In general, the ratio $m$(AB,s) / $m$(MF) is in the range of 1 to 50, more preferably in the range of 2 to 40, and most preferably in the range of 3 to 20.

Embodiments of the Invention

The following embodiments are comprised in the invention:

1. Water-dilutable binders for fibrous materials which are compositions **AB** comprising mixtures of amino resins **A** made from a dialdehyde **A2** and an aminoplast former **A1,** with a reaction product **B** of a carbohydrate **B1** having free hydroxyl groups and an anhydride **B2** of a polycarboxylic acid.

2. The water-dilutable binders of embodiment 1, wherein the aminoplast former **A1** is selected from the group consisting of linear, branched and cyclic amides or amidines or mixtures of these, having at least two amino or acid amide groups -N(H)-R per molecule, where R can be H or a lower alkyl group having from one to four carbon atoms, namely methyl, ethyl, n-propyl, isopropyl, n-butyl, sec-butyl, iso-butyl or tert-butyl, an average of at least two >N(H)- groups per molecule being present in the aminoplast former which are derived from the said amino groups or acid amide groups.

3. The water-dilutable binders of embodiment 1, wherein the dialdehyde **A2** is selected from the group consisting of linear aliphatic dialdehydes having two

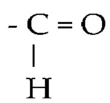

groups per molecule, i. e. two hydrogen atoms bound to a carbonyl carbon atom, viz., a carbon atom which is bound to an oxygen atom by a double bond, and up to six carbon atoms.

4. The water-dilutable binders of embodiment 1, wherein the carbohydrate **B1** has at least two, and not more than eight hydroxyl groups per molecule.

5. The water-dilutable binders of embodiment 4, wherein the carbohydrate **B1** is selected from the group consisting of monosaccharides having up to six carbon atoms per molecule, and disaccharides having up to twelve carbon atoms per molecule.

6. The water-dilutable binders of embodiment 5, wherein the carbohydrate **B1** is selected from the group consisting of the naturally occurring monosaccharides glucose (dextrose), galactose, fructose and xylose, and of the naturally occurring disaccharides sucrose, lactose, maltose, isomaltulose and trehalose.

7. The water-dilutable binders of embodiment 1, wherein the anhydride **B2** of a polycarboxylic acid is selected from the group consisting of anhydrides of aliphatic or aromatic dicarboxylic acids or tricarboxylic acids.

8. The water-dilutable binders as claimed in any one of the preceding embodiments, wherein

- the aminoplast former **A1** is melamine or a mixtures of melamine with ethylene urea and/or urea, wherein the mass fraction of melamine in such mixtures is at least 50 %,
- the dialdehyde **A2** is glyoxal or a mixture of glyoxal with glutaraldehyde, wherein the mass fraction of glyoxal in such mixtures is at least 50 %,
- the carbohydrate **B1** is glucose, or a mixture of glucose with at least one further monosaccharide selected from the group consisting of , and/or at least one disaccharide selected from the group consisting of , wherein the mass fraction of glucose in such mixtures is at least 50 %, and
- the anhydride **B2** of a polycarboxylic acid is maleic anhydride, or a mixture of maleic anhydride with at least one further polycarboxylic acid anhydride selected from the group consisting of the dicarboxylic acid anhydrides diethylmalonic acid anhydride, succinic anhydride, glutaric anhydride, adipic acid anhydride, and phthalic acid anhydride, of the tricarboxylic acid anhydrides trimellithic acid anhydride and wherein the mass fraction of maleic anhydride in such mixtures is at least 50 %, and wherein the mass fraction of tricarboxylic acid anhydrides in such mixtures is not more than 10 %.

9. A process for the preparation of the water-dilutable binders of any one of the embodiments 1 to 8, comprising the following steps:

a) preparation of component A by first charging the aldehyde as aqueous solution, and then adding the aminoplast former in solid form whereupon a slight exotherm is noted, together with an increase of viscosity, followed by raising the temperature in the reaction vessel under stirring to constant viscosity, followed by cooling the solution obtained to room temperature,
b) separately preparing component **B** by first charging water into a reaction vessel, adding the acid anhydride component **B2** under stirring, heating the mixture under stirring until component **B2** is completely dissolved, then cooling, and adjusting the pH to about 4.1 whereafter a further portion of water is added, followed by a water-soluble amine, and after homogenisation, adding the carbohydrate component **B1** under stirring which is continued for about one hour until a homogeneous aqueous solution is obtained,
c) charging component **A** and adding thereto under stirring component **B** in such quantities that the mass fraction $w_{B,sol}$ of the aqueous solution of component **B** in the mixture of solutions of **A** and **B** is from 1 % to 60 %, the ratios $m$(B,s) / $m$(A,s) of the mass $m$(B,s) of solids in **B** to the mass $m$(A,s) of solids in **A** being from 1/99 = 0.01 to 60/40 = 1.5, and mixing by stirring for several minutes.

10. A method of use of the water-dilutable binders of any one of embodiments 1 to 8, or made by the process of claim 9, as binder for mineral fibers, comprising impregnating nonwoven layered plies of mineral fibres with the said binder and curing the impregnated plies in an oven at a temperature of between 110 °C and 325 °C.

11. Plies made from mineral fibres by the method of embodiment 10.

12. Plies of embodiment 11, wherein the mineral fibres are glass fibres.

13. Plies of embodiment 11, wherein the mineral fibres are rock wool or slag wool.

14. A water-dilutable binder comprising the reaction product **A'** of melamine and glyoxal as sole resinous binder.

15. A water-dilutable binder **A"** comprising the reaction product **A'** of melamine and glyoxal in mixture with further reaction products of other aminoplast formers **A1'** different from melamine as mentioned supra (with the set **A1'** being defined as the subset of **A1** which includes all elements thereof with the exception of melamine), and/or other dialdehydes **A2'** different from glyoxal as mentioned supra (with the set **A2'** being defined as the subset of **A2** which includes all elements thereof with the exception of glyoxal).

16. A water-dilutable binder **A'"** comprising the reaction products of mixtures **MA1** of one or more aminoplast formers **A1** with a mixture **MA2** of one or more dialdehydes **A2,** where at least one of the mixtures **MA1** and **MA2** has one more than one component.

Examples

**Example 1** (Component **B** of the invention)

291.1 g of maleic anhydride (n(MAA) = 2.94 mol) were admixed to 334.1 g of deionised water at a temperature of (25 ± 2) °C, the resulting mixture was heated to 40 °C under stirring until the maleic anhydride was completely dissolved. The solution was cooled to 20 °C whereafter the pH was adjusted to 4.1 ± 0.1 by addition of 227.8 g of an aqueous ammonia solution having a mass fraction of ammonia $w(NH3)=m(NH_3)/[m(NH_3)+m(H_2O)]$= 25 % over two hours, where $m(NH_3)$ is the mass of ammonia $NH_3$, and $m(H_2O)$ is the mass of water $H_2O$ in the ammonia solution. Further water (110.5 g) and 93.6 g of an aqueous solution of triethanolamine having a mass fraction of triethanolamine $m([HOEt)_3N])/[m([HOEt)_3N]+m(H_2O)]$ of 85 % were added thereto at a temperature of (22 ± 2) °C under stirring.

445.6 g of glycose monohydrate (technical, mass fraction of water 9.1 %, *n*(Glu) =2.24 mol) were then added under stirring at a temperature of (22 ± 2) °C until complete dissolution which takes about 100 min, and the resinous solution was finally cooled to 19 °C.

The resinous solution obtained had a mass fraction of solids $w_s$ of 49 % (measured from the dry residue obtained after drying for one hour at 135 °C), a viscosity (measured at 25 °C in a cone and plate viscometer at 100 $s^{-1}$) of 32 mPa·s. The pH was 4.9, and mixtures of this resinous solution with varying quantities of further water showed no phase separation over the examined temperature range (25 °C to 70 °C).

Further resinous solutions were prepared using the same procedure, with the following masses of reactants according to Table 1:

Table 1 Reaction Products 1.1 to 1.5 of Glucose and Maleic Anhydride, Masses of Reactants Used

| Reaction Products | | 1.1 | 1.2 | 1.3 | 1.4 | 1.5 |
|---|---|---|---|---|---|---|
| Reactants | unit | | | | | |
| Glucose monohydrate[3] | g | 445.6 | 528.8 | 577.7 | 363.0 | 280.6 |
| Water [1] | g | 331.4 | 298.2 | 278.6 | 364.4 | 397.3 |
| Maleic anhydride[4] | g | 291.1 | 271.0 | 259.2 | 311.1 | 331.0 |
| Water [2] | g | 110.5 | 102.9 | 98.4 | 118.1 | 125.7 |
| Ammonia solution[5] | g | 227.8 | 212.0 | 202.8 | 243.4 | 259.0 |
| Triethanolamine solution[6] | g | 93.6 | 87.1 | 83.3 | 100.0 | 106.4 |
| 1,2 portions of water (deionised water)<br>3 glucose monohydrate technical "Dextrose", mass fraction of glucose: 90.9 %<br>4 maleic anhydride technical, mass fraction of maleic anhydride: 99 %<br>5 concentrated ammonia solution, mass fraction of $NH_3$: 25 %<br>6 triethanolamine "TEA" technical, aqueous solution, mass fraction of TEA: 85 % | | | | | | |

**Example 2** (Component A of the invention)

1059 g of an aqueous solution of glyoxal (with a mass fraction *w*(GO) of glyoxal of 40 %, where

*w*(GO)=*m*(GO)/[*m*(GO)+*m*($H_2O$)], and *m*(GO) is the mass of glyoxal, and *m*($H_2O$) is the mass of water in the solution; amount of substance of GO *n*(GO) =7.299 mol) were charged into a vessel at room temperature (25 °C). 141 g of melamine powder (1.118 mol) were added under stirring and heating up to 65 °C. The ratio *n*(GO)/*n*(Mel) is 6.53 mol/mol. The reaction mixture was stirred at 65 °C for three further hours to yield a viscous resin solution having a mass fraction of solids of 47.9 %, measured as dry residue upon drying for one hour at 135 °C. On a sample of the resin solution, a viscosity of 398 mPa·s was measured in a cone-and-plate instrument at 20 °C and a shear rate of 100 $s^{-1}$. The B times $t_B$ of this resin, measured according to DIN 8987, were 35 s at 130 °C, and 30 s at 170 °C.

Further resins were made with varying ratio n(GO)/*n*(Mel) of the amounts of substance *n*(GO) of glyoxal "GO" and *n*(Mel) of melamine "Mel" according to Table 2.

Table 2a Resins Made from Glyoxal and Melamine; Masses of Reactants Used

| Resins | | 2.1 | 2.2 | 2.3 | 2.4 | 2.5 | 2.6 | 2.7 | 2.8 | 2.9 | 2.10 | 2.11 | 2.12 | 2.13 |
|---|---|---|---|---|---|---|---|---|---|---|---|---|---|---|
| Reactants | unit | | | | | | | | | | | | | |
| *n*(GO)/ *n*(Mel) | mol/ mol | 6.53 | 6.53 | 6.53 | 6.75 | 7 | 9 | 12 | 6.25 | 6 | 5.5 | 5 | 4 | 1 |
| Glyoxal[7] | g | 1059 | 1059 | 1059 | 1328.9 | 1334.3 | 1367.9 | 1398.7 | 1316.9 | 1310.2 | 1295.3 | 1277.9 | 1232.3 | 802.5 |
| Melamine | g | 141 | 141 | 141 | 171.1 | 165.7 | 132.1 | 101.3 | 183.1 | 189.8 | 204.7 | 222.1 | 267.7 | 697.5 |
| Condensation Temperature | °C | 65 | 80 | 50 | 65 | 65 | 65 | 65 | 65 | 65 | 65 | 65 | 65 | 65 |

7 aqueous solution of glyoxal "GO", mass fraction of GO: 40 %

The following data were measured on samples from these resins (runs 2.11, 2.12 and 2.13 did not produce resins due to the low excess of glyoxal):

Table 2b Properties of Resins of Table 2a

| Resins | | 2.1 | 2.2 | 2.3 | 2.4 | 2.5 | 2.6 | 2.7 | 2.8 | 2.9 | 2.10 |
|---|---|---|---|---|---|---|---|---|---|---|---|
| Property | unit | | | | | | | | | | |
| $w_s$[8] (135 °C \|1 h) | % | 47.9 | 45.6 | 47.8 | 48.2 | 47.3 | 46.3 | 45.5 | 46.8 | 47.4 | 49.5 |
| pH | | 4.7 | 4.0 | 5.0 | 4.6 | 4.6 | 4.6 | 4.5 | 4.7 | 4.7 | 5.9 |
| $\eta$[9] | mPa·s | 398 | 332 | 176 | 390 | 114 | 54 | 26 | 242 | 431 | 80 Pa·s |
| $t_B$[10] (130 °C) | s | 35 | 31 | 35 | 39 | 32 | 22 | 21 | 38 | 48 | nm |
| $t_B$[10] (170 °C) | s | 30 | 29 | 33 | 36 | 27 | 20 | 21 | 32 | 37 | nm |

8 mass fraction of solids $w_s$ measured from the dry residue obtained after drying for one hour at 135°C
9 dynamic viscosity measured in a cone-and-plate viscosimeter at 20°C and a shear rate of 100 $s^{-1}$
10 B times $t_B$ of this resin, measured according to DIN 8987 at the temperature stated; nm means "not measurable" due to excessive viscosity

**Example 3** (mixtures of components **A** and **B** according to the invention)

The following mixtures were prepared from components A and B of Examples 1 and 2; their B times $t_B$ and their dry residues $w_s$ as defined supra were determined:

Table 3 resin mixture samples of resin solutions of components **A** (as prepared in example 2) and **B** (as prepared in example 1), mass fractions $w_A$ of components **A** and $w_B$ of component **B,** calculated as $w_A=m_A/(m_A+m_B)$ and $w_B=m_B/(m_A+m_B)$, where $m_A$ is the mass of component **A** and $m_B$ is the mass of component **B;** composition and test results

| Sample unit | $w_A$ % | A from Example | $w_B$ % | B from example | $t_B$ (130 °C) s | $t_B$ (170 °C) s | $w_s$ (135 °C \| 1 h) % |
|---|---|---|---|---|---|---|---|
| 30 | 0 | | 100 | 2.1 | 963 | 140 | 45.8 |
| 31 | 25 | 1.1 | 75 | 2.1 | 313 | 132 | 43.3 |
| 32 | 50 | 1.1 | 50 | 2.1 | 73 | 40 | 44.3 |
| 33 | 75 | 1.1 | 25 | 2.1 | 25 | 17 | 43.8 |
| 34 | 100 | 1.1 | 0 | | 35 | 30 | 47.9 |

It can be seen that the B-times of the glyoxal / melamine resins **A** can be substantially reduced by admixture of resin solutions **B** made from maleic anhydride and glucose which alone have much higher B-times than the resins **A.** Surprisingly, it has been found that there is an optimum of this enhancement of curing speed in the range of mass fractions of component **B** between 5 % and 40 %, particularly between 10 % and 35 %, and preferably between 15 % and 30 % where the B-time of the mixture is lower than that of resin composition **A** alone. This behaviour could not have been expected.

## Claims

1. Water-dilutable binders for fibrous materials which are compositions **AB** comprising mixtures of amino resins **A** made from a dialdehyde **A2** and an aminoplast former **A1,** with a reaction product **B** of a carbohydrate **B1** having free hydroxyl groups and an anhydride **B2** of a polycarboxylic acid.

2. The water-dilutable binders as claimed in claim 1, wherein the aminoplast former **A1** is selected from the group consisting of linear, branched and cyclic amides or amidines or mixtures of these, having at least two amino or acid amide groups -N(H)-R per molecule, where R can be H or a lower alkyl group having from one to four carbon atoms, namely methyl, ethyl, n-propyl, isopropyl, n-butyl, sec-butyl, iso-butyl or tert-butyl, an average of at least two >N(H)-groups per molecule being present in the aminoplast former which are derived from the said amino groups or acid amide groups.

**3.** The water-dilutable binders as claimed in claim 1, wherein the dialdehyde **A2** is selected from the group consisting of linear aliphatic dialdehydes having two

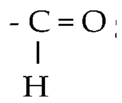

groups per molecule, i. e. two hydrogen atoms bound to a carbonyl carbon atom, viz., a carbon atom which is bound to an oxygen atom by a double bond, and up to six carbon atoms.

**4.** The water-dilutable binders as claimed in claim 1, wherein the carbohydrate **B1** has at least two, and not more than eight hydroxyl groups per molecule.

**5.** The water-dilutable binders as claimed in claim 4, wherein the carbohydrate **B1** is selected from the group consisting of monosaccharides having up to six carbon atoms per molecule, and disaccharides having up to twelve carbon atoms per molecule.

**6.** The water-dilutable binders as claimed in claim 5, wherein the carbohydrate **B1** is selected from the group consisting of the naturally occurring monosaccharides glucose (dextrose), galactose, fructose and xylose, and of the naturally occurring disaccharides sucrose, lactose, maltose, isomaltulose and trehalose.

**7.** The water-dilutable binders as claimed in claim 1, wherein the anhydride **B2** of a polycarboxylic acid is selected from the group consisting of anhydrides of aliphatic or aromatic dicarboxylic acids or tricarboxylic acids.

**8.** The water-dilutable binders as claimed in any one of the preceding claims, wherein - the aminoplast former **A1** is melamine or a mixtures of melamine with ethylene urea and/or urea, wherein the mass fraction of melamine in such mixtures is at least 50 %,

- the dialdehyde **A2** is glyoxal or a mixture of glyoxal with glutaraldehyde, wherein the mass fraction of glyoxal in such mixtures is at least 50 %,
- the carbohydrate **B1** is glucose, or a mixture of glucose with at least one further monosaccharide selected from the group consisting of , and/or at least one disaccharide selected from the group consisting of , wherein the mass fraction of glucose in such mixtures is at least 50 %, and
- the anhydride **B2** of a polycarboxylic acid is maleic anhydride, or a mixture of maleic anhydride with at least one further polycarboxylic acid anhydride selected from the group consisting of the dicarboxylic acid anhydrides diethylmalonic acid anhydride, succinic anhydride, glutaric anhydride, adipic acid anhydride, and phthalic acid anhydride, of the tricarboxylic acid anhydrides trimellithic acid anhydride and wherein the mass fraction of maleic anhydride in such mixtures is at least 50 %, and wherein the mass fraction of tricarboxylic acid anhydrides in such mixtures is not more than 10 %.

**9.** A process for the preparation of the water-dilutable binders as claimed in any one of claims 1 to 8, comprising the following steps:

a) preparation of component A by first charging the aldehyde as aqueous solution, and then adding the aminoplast former in solid form whereupon a slight exotherm is noted, together with an increase of viscosity, followed by raising the temperature in the reaction vessel under stirring to constant viscosity, followed by cooling the solution obtained to room temperature,
b) separately preparing component **B** by first charging water into a reaction vessel, adding the acid anhydride component **B2** under stirring, heating the mixture under stirring until component **B2** is completely dissolved, then cooling, and adjusting the pH to about 4.1 whereafter a further portion of water is added, followed by a water-soluble amine, and after homogenisation, adding the carbohydrate component **B1** under stirring which is continued for about one hour until a homogeneous aqueous solution is obtained,
c) charging component **A** and adding thereto under stirring component **B** in such quantities that the mass fraction $w_{B,sol}$ of the aqueous solution of component **B** in the mixture of solutions of **A** and **B** is from 1 % to 60 %, the ratios m(B,s) / m(A,s) of the mass m(B,s) of solids in **B** to the mass $m$(A,s) of solids in **A** being from 1/99 = 0.01 to 60/40 = 1.5, and mixing by stirring for several minutes.

10. A method of use of the water-dilutable binders of any one of claims 1 to 8, or made by the process of claim 9, as binder for mineral fibers, comprising impregnating nonwoven layered plies of mineral fibres with the said binder and curing the impregnated plies in an oven at a temperature of between 110 °C and 325 °C.

11. Plies made from mineral fibres by the method of claim 10.

12. Plies as claimed in claim 11, wherein the mineral fibres are glass fibres.

13. Plies as claimed in claim 11, wherein the mineral fibres are rock wool or slag wool.

Europäisches Patentamt
European Patent Office
Office européen des brevets

# EUROPEAN SEARCH REPORT

Application Number
EP 20 02 0662

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2013/327250 A1 (SHOOSHTARI KIARASH ALAVI [US]) 12 December 2013 (2013-12-12)<br>* examples *<br>* claims *<br>----- | 1-13 | INV.<br>C03C13/06<br>C03C25/32<br>C03C25/34<br>C08L61/24<br>C08L61/28<br>C09D161/24<br>C09D161/28<br>D04H1/4218<br>D04H1/64 |
| Y,D | WO 2008/053332 A1 (DYNEA OY [FI]; VAN HERWIJNEN HENDRIKUS W G [AT] ET AL.) 8 May 2008 (2008-05-08)<br>* examples *<br>* claims *<br>----- | 1-13 | |
| X<br><br>Y | EP 0 354 023 A2 (SEQUA CHEMICALS INC [US]) 7 February 1990 (1990-02-07)<br>* examples *<br>* table I *<br>* claims *<br>----- | 1-13<br><br>1-13 | |
| A | WO 2013/188533 A1 (MOMENTIVE SPECIALTY CHEM INC [US] ET AL.) 19 December 2013 (2013-12-19)<br>* examples *<br>----- | 1-13 | TECHNICAL FIELDS SEARCHED (IPC)<br>C03C<br>D04H<br>C09J<br>C08L<br>C09D |

The present search report has been drawn up for all claims

1

| Place of search | Date of completion of the search | Examiner |
|---|---|---|
| Munich | 9 June 2021 | Omegna, Anna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 20 02 0662

This annex lists the patent family members relating to the patent documents cited in the above-mentioned European search report. The members are as contained in the European Patent Office EDP file on
The European Patent Office is in no way liable for these particulars which are merely given for the purpose of information.

09-06-2021

| Patent document cited in search report | Publication date | Patent family member(s) | Publication date |
|---|---|---|---|
| US 2013327250 A1 | 12-12-2013 | CA 2817571 A1 | 07-12-2013 |
| | | US 2013327250 A1 | 12-12-2013 |
| | | US 2015119507 A1 | 30-04-2015 |
| | | US 2020308459 A1 | 01-10-2020 |
| WO 2008053332 A1 | 08-05-2008 | AR 063564 A1 | 04-02-2009 |
| | | AU 2007315839 A1 | 08-05-2008 |
| | | BR PI0718260 A2 | 07-01-2014 |
| | | CA 2666749 A1 | 08-05-2008 |
| | | CL 2007003177 A1 | 14-03-2008 |
| | | CN 101568498 A | 28-10-2009 |
| | | DK 2077977 T3 | 10-03-2014 |
| | | EP 2077977 A1 | 15-07-2009 |
| | | ES 2458965 T3 | 07-05-2014 |
| | | NZ 576288 A | 30-09-2011 |
| | | PL 2077977 T3 | 30-05-2014 |
| | | RU 2009113537 A | 10-12-2010 |
| | | SI 2077977 T1 | 31-03-2014 |
| | | UA 99115 C2 | 25-07-2012 |
| | | US 2008108741 A1 | 08-05-2008 |
| | | WO 2008053332 A1 | 08-05-2008 |
| EP 0354023 A2 | 07-02-1990 | EP 0354023 A2 | 07-02-1990 |
| | | JP H0299655 A | 11-04-1990 |
| WO 2013188533 A1 | 19-12-2013 | CN 104334606 A | 04-02-2015 |
| | | KR 20150020213 A | 25-02-2015 |
| | | US 2013337272 A1 | 19-12-2013 |
| | | WO 2013188533 A1 | 19-12-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 539738
- US 2133235 A
- US 2133236 A
- CA 2558981 C
- US 7638160 B2
- US 8057860 B2
- US 20100068961 A1
- WO 2008053332 A1
- EP 2077977 B1
- EP 2222759 B1
- WO 2009080696 A2
- US 9242899 B2
- US 9976061 B2
- EP 3133116 A1
- EP 0281921 A2
- DE 2110612 A1
- DE 1619289 A1
- US 3320197 A
- GB 976712 A
- US 20120277475 A1